# EUROPEAN PATENT APPLICATION

(11) **EP 4 428 165 A1**
(43) Date of publication of application: **11.09.2024**
(21) Application number: 24160336.4
(22) Date of filing: 28.02.2024
(51) Int. Cl.: C08F 210/02, C08F 220/06, C08F 2/38, C08F 4/38

(54) **METHOD OF PRODUCING ETHYLENE-CARBOXYLIC ACID COPOLYMER**

(30) Priority: 09.03.2023 KR 20230031275
(71) Applicant: SK Innovation Co., Ltd., Seoul 03188 (KR); SK Geo Centric Co., Ltd., Jongno-gu Seoul 03188 (KR)
(72) Inventor: LEE, Ho Seong, 34124 Daejeon (KR); LEE, In Su, 34124 Daejeon (KR); KIM, Won Bin, 34124 Daejeon (KR); HONG, Seok Bin, 34124 Daejeon (KR); BUSCH, Markus, 64560 Riedstadt (DE); KLIMECK, Alexander, 64287 Darmstadt (DE)
(74) Representative: Prüfer & Partner mbB Patentanwälte · Rechtsanwälte

(57) **Abstract**

In a method of producing an ethylene-carboxylic acid copolymer according to example embodiments of the present disclosure, an ethylene monomer and a carboxylic acid comonomer are supplied to a reactor. The ethylene monomer and the carboxylic acid comonomer are copolymerized using a chain transfer agent represented by a specific chemical formula to form the ethylene-carboxylic acid copolymer.

## Description

### BACKGROUND

### 1. Field

The disclosure of the present application relates to a method of producing an ethylene-carboxylic acid copolymer.

### 2. Description of the Related Art

For example, an ethylene-carboxylic acid copolymer such as an ethylene-acrylic acid copolymer is used for various products such as a sealing material, an adhesive, a packing material, an optical film, etc.

The ethylene-carboxylic acid copolymer may be prepared by polymerizing ethylene and a carboxylic acid-based compound (e.g., acrylic acid, methacrylic acid, etc.) as a comonomer through a continuous reactor.

In the polymerization of an ethylene monomer and a carboxylic acid comonomer, a chain transfer agent may be used to control a molecular weight of the ethylene-carboxylic acid copolymer. The carboxylic acid comonomer used in the copolymerization of the ethylene-carboxylic acid copolymer may have a high reactivity, and types of usable chain transfer agents may be limited.

Examples of widely known chain transfer agent include an aldehyde-based chain transfer agent, an alcohol-based chain transfer agent, a sulfide-based chain transfer agent. However, the above-mentioned chain transfer agents may destabilize the carboxylic acid, thereby generating a side reaction such as a polymerization reaction between the carboxylic acids.

Further, a hydrocarbon-based chain transfer agent may reduce a production efficiency due to a low chain transfer constant, and residual chain transfer agents may be circulated or lost, thereby increasing a production cost of the ethylene-carboxylic acid copolymer.

### SUMMARY

According to an aspect of the present invention, there is provided a method of producing an ethylene-carboxylic acid copolymer having improved efficiency.

In a method of producing an ethylene-carboxylic acid copolymer, an ethylene monomer and a carboxylic acid comonomer are respectively independently supplied to a reactor. The ethylene monomer and the carboxylic acid comonomer are copolymerized using a chain transfer agent represented by Chemical Formula 1.

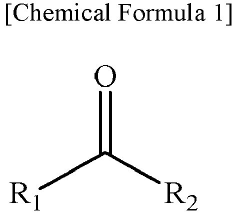

In Chemical Formula 1, R₁ is a C1 to C4 alkyl group, and R₂ is a C4 to C12 alkyl group, when R₁ is a C1 to C2 alkyl group, and R₂ is a C3 to C12 alkyl group when R₁ is a C3 to C4 alkyl group.

In some embodiments, R₁ may be a methyl group or a propyl group, and R₂ may be an alkyl group having 4 to 6 carbon atoms when R₁ is the methyl group, and R₂ may be an alkyl group having 3 to 6 carbon atoms when R₁ is the propyl group.

In some embodiments, a sum of the number of carbon atoms in R₁ and R₂ may be 6.

In some embodiments, the chain transfer agent may include at least one of methyl isobutyl ketone (MIBK), 2-heptanone and 4-heptanone.

In some embodiments, a chain transfer constant of the chain transfer agent for ethylene may be in a range from 0.01 to 1.

In some embodiments, the chain transfer constant of the chain transfer agent for ethylene may be greater than 0.08 and less than or equal to 1.

In some embodiments, a radical initiator is further supplied.

In some embodiments, the radical initiator may include an organic peroxide.

In some embodiments, a temperature of the copolymerization may be in a range from 150°C to 350°C, and a pressure applied during the copolymerization may be in a range from 1,500 bar to 3,000 bar.

In some embodiments, the carboxylic acid comonomer may be an unsaturated carboxylic acid capable of providing a chain polymerization reaction and may include at least one selected from the group consisting of (meth)acrylic acid, methyl acrylate, ethyl acrylate, butyl acrylate, glycidyl methacrylate, maleic acid and vinyl acetate.

In some embodiments, a ratio of the flow rate (g/hour) of an injection amount of the chain transfer agent relative to an injection amount of the carboxylic acid comonomer is in a range from 0.1 to 5, from 0.1 to 3, or from 0.3 to 2.0.

In some embodiments, unreacted portions of the ethylene monomer, the carboxylic acid comonomer and the chain transfer agent may be recycled into the copolymerization.

In a further aspect, there is provided a method of operating a production of an ethylene-carboxylic acid copolymer, which includes a copolymerization of an ethylene monomer and a carboxylic acid comonomer in the presence of a chain transfer agent represented by Chemical Formula 1. 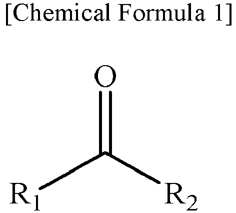
wherein in Chemical Formula 1, R₁ is a C1 to C4 alkyl group and R₂ is a C4 to C12 alkyl group when R₁ is a C1 to C2 alkyl group, and R₂ is a C3 to C12 alkyl group when R₁ is a C3 to C4 alkyl group,
wherein the method comprises recycling unreacted portions of the ethylene monomer, the carboxylic acid comonomer and the chain transfer agent into the copolymerization.

In a further aspect, there is provided a use of an ethylene-carboxylic acid copolymer, which has been produced by the method disclosed herein, for manufacturing an adhesive film, a sealing material, an insulating coating layer, a packaging film, or an optical film.

In a method for producing an ethylene-carboxylic acid copolymer according to embodiments of the present disclosure, a chain transfer agent may be injected to control a molecular weight of the ethylene-carboxylic acid copolymer. A compound represented by a certain chemical formula may be used as the chain transfer agent, so that a side reaction such as a polymerization reaction, an acid-base reaction, a hydrogen reaction, etc., between a carboxylic acid and/or the chain transfer agent may be suppressed.

In some embodiments, the chain transfer agent may have a chain transfer constant within a predetermined range. Accordingly, the molecular weight of the ethylene-carboxylic acid copolymer may be controlled even when using a small amount of the chain transfer agent. Thus, an amount of recirculated or lost chain transfer agent may be reduced, and thus copolymerization efficiency may be improved.

In some embodiments, a carboxylic acid comonomer and a chain transfer agent may be injected for the copolymerization with ethylene. An injection amount of the carboxylic acid comonomer relative to the chain transfer agent may be maintained within a predetermined ratio. Accordingly, the recirculation loss of the chain transfer agent may be reduced.

### BRIEF DESCRIPTION OF THE DRAWINGS

FIG. 1 is a flow diagram illustrating a method of producing an ethylene-carboxylic acid copolymer in accordance with example embodiments.
FIG. 2 is a flow diagram illustrating a method of producing an ethylene-carboxylic acid copolymer in accordance with some embodiments.

### DETAILED DESCRIPTION OF THE EMBODIMENTS

According to embodiments of the present disclosure, there is provided a method of producing an ethylene-carboxylic acid copolymer from an ethylene monomer and a carboxylic acid comonomer. For example, a chain transfer agent may be injected into the ethylene monomer together with the carboxylic acid comonomer to copolymerize the ethylene monomer and the carboxylic acid comonomer.

Hereinafter, the present disclosure will be provided in detail with reference to the accompanying experimental examples and drawings. However, those skilled in the art will appreciate that such embodiments described with reference to the accompanying drawings are provided to further understand the concept of the present invention and do not limit subject matters to be protected as disclosed in the detailed description and appended claims.

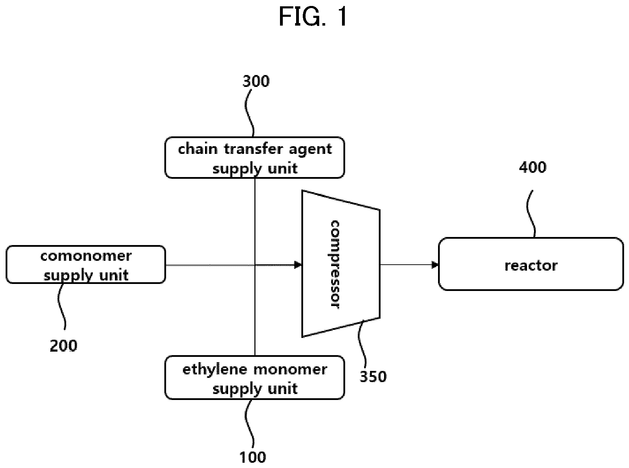

FIG. 1 is a flow diagram illustrating a method of producing an ethylene-carboxylic acid copolymer in accordance with example embodiments.

Referring to FIG. 1, an ethylene monomer, a carboxylic acid monomer and a chain transfer agent may be injected into a reactor 400. For example, the ethylene monomer, the carboxylic acid monomer and the chain transfer agent may be injected independently, or may be injected in a mixed state of two or more thereof.

In example embodiments, the ethylene monomer may be injected from a ethylene monomer supply unit 100 to the reactor 400.

For example, the ethylene monomer may be compressed under a temperature condition from 10°C to 100°C and a pressure condition from 100 bar to 500 bar. In an embodiment, the ethylene monomer may be compressed under a temperature condition from 10°C to 50°C and a pressure condition from 100 bar to 300 bar. In the above range, the ethylene monomer may be efficiently injected into the reactor 400 without an excessive self-polymerization between the ethylene monomers.

In an embodiment, an internal pressure of a flow path through which the ethylene monomer is transferred may be maintained within a range from 100 bar to 500 bar.

In example embodiments, the carboxylic acid comonomer and the chain transfer agent may be injected into the reactor 400. For example, the carboxylic acid comonomer and the chain transfer agent may be supplied to the reactor 400 from a comonomer supply unit 200 and a chain transfer agent supply unit 300, respectively.

The carboxylic acid comonomer may include an unsaturated carboxylic acid capable of providing a chain polymerization reaction.

In some embodiments, (meth)acrylic acid, (meth)acrylate, maleic acid, vinyl acetate, etc., may be used as the carboxylic acid comonomer. The (meth)acrylate may include, e.g., methyl acrylate, ethyl acrylate, butyl acrylate, glycidyl methacrylate, etc.

The term "(meth)acrylic acid" herein is used as a term encompassing methacrylic acid or acrylic acid.

The term "(meth)acrylate" herein is used as a term encompassing methacrylate or acrylate.

In example embodiments, the chain transfer agent may be injected into the reactor simultaneously or with an interval with the carboxylic acid comonomer. The chain transfer agent may be used to terminate a chain polymerization reaction by reacting with a chain of a copolymer in which a copolymerization proceeds. A molecular weight and a molecular weight distribution of the polymer may be easily controlled to a desired range by the chain transfer agent.

The chain transfer agent may include a compound represented by Chemical Formula 1 below.

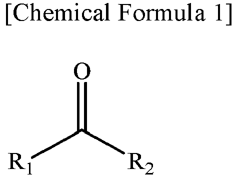

In Chemical Formula 1, R₁ may be a C1 to C4 alkyl group.

In Chemical Formula 1, if R₁ is a C1 or C2 alkyl group R₂ may be a C4 to C12 alkyl group, or a C4 to C6 alkyl group.

In Chemical Formula 1, if R₁ is a C3 or C4 alkyl group, R₂ may be a C3 to C12 alkyl group, or a C3 to C6 alkyl group.

For example, if the number of carbon atoms of the alkyl group in R₁ and R₂ is 3 or more, the alkyl group may have a linear or branched structure.

Due to a reactivity of a carboxyl group, a side reaction (e.g., an acid-base reaction or a hydrogen reaction) may occur between the carboxylic acid and the chain transfer agent having a different functional group. Further, the chain transfer agent may destabilize an intrinsic structure of the carboxylic acid , so that a self-polymerization of the carboxylic acids is reduced.

The chain transfer agent represented by Chemical Formula 1 may have a lower reactivity with a carboxyl group than those of other types of chain transfer agents (e.g., a aldehyde-based agent an alcohol-based agent, a sulfide-based agent, etc.), thereby reducing side reactions.

Additionally, the chain transfer agent represented by Chemical Formula 1 may have a high chain transfer constant (Cs). The chain transfer constant may represent a reactivity of a chain transfer agent terminating a polymerization reaction. As the chain transfer constant becomes larger, an amount of the chain transfer agent required to reduce a polymer molecular weight in a polymerization process may become lower.

Thus, the compound represented by Chemical Formula 1 may be used as the chain transfer agent, so that a molecular weight or a molecular weight distribution of the ethylene-carboxylic acid copolymer may be effectively controlled even using a small amount of the chain transfer agent.

In some embodiments, the chain transfer constant of the chain transfer agent may be at least 0.01 or at least 0.05 or at least 0.08, and/or at most 1 or at most 0.5 or at most 0.2, and may for instance lie in a range from 0.01 to 1, from 0.05 to 1, or from 0.08 to 1. In the above range, the amount of the chain transfer agent required for the copolymerization of ethylene and the carboxylic acid may be reduced, and thus economic feasibility of a process operation may be improved.

In an embodiment, the chain transfer constant of the chain transfer agent may be greater than 0.08 and less than or equal to 1. In the above range, the molecular weight and the molecular weight distribution of the ethylene-carboxylic acid copolymer may be more efficiently controlled.

In some embodiments, R₁ of the compound represented by Chemical Formula 1 may be a methyl group or a propyl group.

For example, if R₁ of the compound represented by Chemical Formula 1 is the methyl group, R₂ may be a C4 or C5 alkyl group. If R₁ of the compound represented by Chemical Formula 1 is the propyl group, R₂ may be an alkyl group having 6 or less carbon atoms (an C1 to C6 alkyl group).

Accordingly, the chain transfer constant of the chain transfer agent may be enhanced, so that the molecular weight or the molecular weight distribution of the ethylene-carboxylic acid copolymer may be controlled even using a small amount of the chain transfer agent.

In an embodiment, the chain transfer agent represented by Chemical Formula 1 may be methyl isobutyl ketone (MIBK). The chain transfer constant of MIBK for ethylene may exceed 0.08. Accordingly, the molecular weight or molecular weight distribution of the ethylene-carboxylic acid copolymer may be efficiently controlled even using a small amount of MIBK.

In some embodiments, a sum of the carbon atoms of R₁ and R₂ in Chemical Formula 1 may be 6. In one embodiment, the chain transfer agent represented by Chemical Formula 1 may include 2-heptanone or 4-heptanone.

The chain transfer constant for ethylene of 2-heptanone and 4-heptanone exceeds 0.08. Additionally, 2-heptanone and 4-heptanone have an even further lowered reactivity with the carboxylic acid than those of other types of the chain transfer agents (e.g., a aldehyde-based compound, an alcohol-based compound, a sulfite-based compound, etc.). Thus, the side reaction with the carboxylic acid and the self-polymerization of the carboxylic acids may be suppressed, and the molecular weight or the molecular weight distribution of the ethylene-carboxylic acid copolymer may be controlled even using a small amount of the chain transfer agent.

In some embodiments, the carboxylic acid comonomer and the chain transfer agent may be separated and individually supplied to the reactor 400 from the comonomer supply unit 200 and the chain transfer agent supply unit 300, respectively.

For example, the carboxylic acid comonomer and the chain transfer agent may be individually introduced into the reactor 400 from the comonomer supply unit 200 and the chain transfer agent supply unit 300, respectively. Thus, a contact time between the carboxylic acid comonomer and the chain transfer agent may be lowered before the carboxylic acid comonomer is copolymerized with the ethylene monomer so that the side reaction may be suppressed.

In some embodiments, a ratio (e.g., a flow rate (g/hour) ratio) of an injection amount of the chain transfer agent relative to an injection amount of the carboxylic acid comonomer may be in a range from 0.1 to 5, from 0.1 to 4, or from 0.1 to 3.

Within the above range, the molecular weight of the ethylene-carboxylic acid copolymer may be more efficiently controlled while reducing the side reaction between the carboxylic acid comonomer and the chain transfer agent.

In an embodiment, the ratio of the injection amount of the chain transfer agent relative to the injection amount of the carboxylic acid comonomer may be in a range from 0.1 to 2.5, from 0.1 to 2.0, from 0.3 to 2.0, from 0.5 to 1.5, from 0.9 to 1.5, or from 0.9 to 1.3. In the above range, the side reaction between the carboxylic acid comonomer and the chain transfer agent may be further reduced.

In an embodiment, the ethylene monomer, the carboxylic acid comonomer and the chain transfer agent injected into the reactor 400 may be mixed while being contacted with each other. Thereafter, the copolymerization reaction may proceed in the reactor 400 to prepare the ethylene-carboxylic acid copolymer.

For example, if an acrylic acid comonomer is used as the carboxylic acid comonomer, the ethylene monomer, the acrylic acid comonomer and the chain transfer agent may be mixed, contacted and copolymerized in the reactor 400. Accordingly, the ethylene-acrylic acid copolymer (EAA) may be prepared.

In some embodiments, a radical initiator may be supplied to the reactor 400 together with the ethylene polymer, the carboxylic acid comonomer and the chain transfer agent. The radical initiator may easily form radicals by an external stimulation such as heat or light. The radicals formed by the radical initiator may react with a monomer to form a radical in the monomer. Accordingly, a copolymerization reaction may be initiated.

In some embodiments, the radical initiator may include an organic peroxide. For example, a peroxide or a peroxide-based compound such as tert-butyl peroxyacetate (TBPA), tert-butyl peroxy-2-ethylhexanoate (TBPEH), benzoyl peroxide, acetyl peroxide, dilauroyl peroxide, di-tert-butyl peroxide, cumene peroxide, hydrogen peroxide, succinic acid peroxide, peracetic acid (PAA), methyl ethyl ketone peroxide (MEKPO), etc., may be used.

When the organic peroxide is used as the radical initiator, a reaction rate may be controlled by a short half-life and a high reactivity of the organic peroxide. Accordingly, the radical initiator including the organic peroxide may control the molecular weight of the ethylene-carboxylic acid copolymer together with the chain transfer agent.

In an embodiment, a content of the radical initiator may be in a range from 0.001 weight percent (wt%) to 1 wt%, or from 0.01 wt% to 0.5 wt%, based on a sum of weights of the ethylene monomer and the carboxylic acid comonomer.

In some embodiments, one or more additive such as a reaction inhibitor, an antioxidant and/or a solvent may also be supplied to the reactor 400.

The reaction inhibitor may be additionally included to inhibit the side reaction of the carboxylic acid comonomer and the chain transfer agent. For example, the reaction inhibitor may inhibit the side reaction through a competition reaction with the chain transfer agent.

The solvent may include a medium capable of allowing the copolymerization reaction between the ethylene monomer and the carboxylic acid comonomer therein, and is not limited to specific compounds. The solvent may include, e.g., methyl alcohol, ethyl alcohol, isopropyl alcohol, methyl ethyl ketone, tetrahydrofuran, acetone, ethyl acetate, propyl acetate, butyl acetate, etc.

A copolymerization reaction of a mixture including the ethylene monomer and the carboxylic acid comonomer injected into the reactor 400 may be performed to prepare the ethylene-carboxylic acid copolymer. After the completion of the copolymerization reaction in the reactor 400, the ethylene-carboxylic acid copolymer may be discharged as a product.

In some embodiments, the mixture including the ethylene monomer and the carboxylic acid comonomer may be reacted under high pressure and high temperature conditions. For example, the mixture may be copolymerized in the reactor 400 at a pressure from 1,000 bar to 3,000 bar, or from 1,500 bar to 2,500 bar and at a temperature from 150°C to 350°C, or from 200°C to 300°C.

Within the above range, ethylene may exist as a supercritical fluid. Accordingly, the copolymerization of ethylene in a supercritical fluid state and the carboxylic acid comonomer may be initiated, and a copolymerization rate may be enhanced.

In an embodiment, the ethylene monomer and the carboxylic acid comonomer may be compressed to a pressure in a range from 1,000 bar to 3,000 bar or from 1,500 bar to 2,500 bar in a compressor 350, and then discharged from the compressor 350 to the reactor 400 at high pressure. Accordingly, the ethylene monomer and the carboxylic acid comonomer may be copolymerized under the high pressure conditions in the reactor.

In an embodiment, the ethylene monomer and the carboxylic acid comonomer may be heated to a temperature in a range from 150°C to 350°C, or from 200°C to 300°C in the reactor 400. Accordingly, the ethylene monomer and the carboxylic acid comonomer may be copolymerized under the high-temperature conditions in the reactor.

In some embodiments, a weight average molecular weight of the ethylene-carboxylic acid copolymer produced from the reactor 400 may be in a range from 8,000 to 1,000,000.

In some embodiments, an ethylene content (e.g., a content of an ethylene-derived unit or block) based on a total weight of the ethylene-carboxylic acid copolymer may be in a range from 60 wt% to 98 wt%, or from 75 wt% to 97.5 wt%. In some embodiments, a content of the carboxylic acid (e.g., a content of a carboxylic acid-derived unit or block) based on the total weight of the ethylene-carboxylic acid copolymer may be in a range from 2 wt% to 40 wt%, or from 2.5 wt% to 25 wt%.

As shown in FIG. 1, in some embodiments, the ethylene monomer, the carboxylic acid comonomer and the chain transfer agent may be individually supplied from the ethylene monomer supply unit 100, the comonomer supply unit 200 and the chain transfer agent supply unit 300, respectively, and then mixed with each other. The mixture may be transferred to the compressor 350, and then discharged from the compressor 350 to the reactor 400 at the high pressure. Accordingly, polymerization reaction rate and efficiency may be enhanced while suppressing self-polymerization of each monomer.

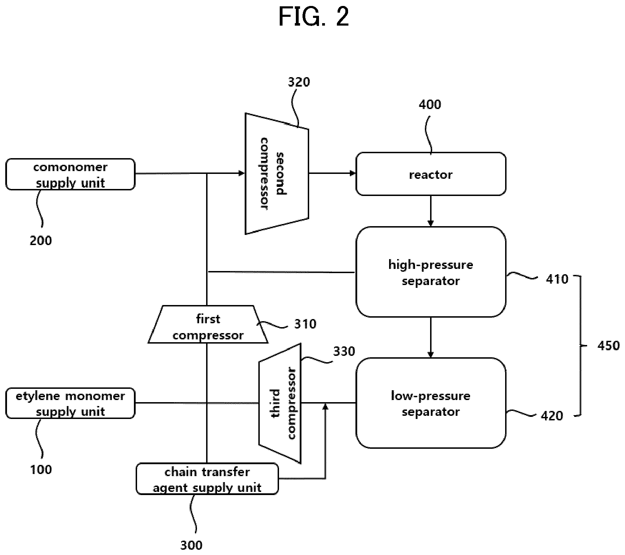

FIG. 2 is a flow diagram illustrating a method of producing an ethylene-carboxylic acid copolymer in accordance with some embodiments.

Referring to FIG. 2, unreacted residues in the mixture including the ethylene monomer and the carboxylic acid comonomer may be discharged from the reactor 400 to a separator 450. The separator 450 may include, e.g., a high-pressure separator 410 or a low-pressure separator 420 including a filter unit capable of separating the unreacted residues.

In some embodiments, the ethylene monomer and the chain transfer agent may be discharged from the ethylene monomer supply unit 100 and the chain transfer agent supply unit 300, respectively, and then supplied as a first mixture through a first compressor 310. The carboxylic acid comonomer may be discharged through the comonomer supply unit 200, and then mixed with the first mixture to form a second mixture. The second mixture may be supplied to the reactor 400 through a second compressor 320 to perform the above-described copolymerization reaction.

The unreacted residue discharged from the reactor 400 may be filtered through the separator 450 and recirculated in the polymerization process.

For example, a chain transfer agent component and an ethylene monomer component among the recirculated components may be supplied from the low-pressure separator 420 to a third compressor 330. The recirculated components may be supplied to the first mixture through the third compressor 330.

In some embodiments, the chain transfer agent may be additionally supplied between the low pressure separator 420 and the third compressor 330, so that the chain transfer agent supply and the recirculated component supply may be continuously merged together.

In some embodiments, a portion of the recirculated components filtered through the high-pressure separator 410 may be circulated to the first mixture discharged from the first compressor 310.

Through the above-described recirculation process, a consumption amount of the ethylene monomer, the carboxylic acid comonomers and the chain transfer agent may be reduced, and productivity of the ethylene-carboxylic acid comonomer may be improved.

For example, the above-described ethylene-carboxylic acid copolymer may become a product in the form of a pellet, and may be used for an adhesive film, a sealing material, an insulating coating layer, a packaging film, etc.

Hereinafter, specific experimental examples are proposed to more concretely describe the present disclosure. However, the following examples are only given for illustrating the present disclosure and those skilled in the related art will obviously understand that these examples do not restrict the appended claims but various alterations and modifications are possible within the scope and spirit of the present invention. Such alterations and modifications are duly included in the appended claims.

### Examples and Comparative Examples

### Example 1

### (1) Production of ethylene-acrylic acid copolymer

2,000 g/h of an ethylene monomer compressed to 2,000 bar, 80 g/h of an acrylic acid comonomer, a radical initiator and a chain transfer agent were injected into a reactor.

As the radical initiator, a mixture of t-butyl peroxyacetate (TBPA) and t-butyl-perxoy-2-ethylhexanoate (TBPEH) in a weight ratio of 2.5:1 was injected at 0.5 ml/h.

Injected amounts and types of the chain transfer agents are shown in Table 1 below.

The reactor into which the ethylene monomer, the acrylic acid comonomer, the chain transfer agent and the radical initiator were injected was heated to 250°C. Thereafter, a copolymerization reaction was performed for 1 hour to prepare an ethylene-acrylic acid copolymer.

### Examples 2 to 9 and Comparative Examples 1 to 9

An ethylene acrylic acid copolymer was produced by the same method as that in Example 1, except that the type of the chain transfer agent and the injected amount of the chain transfer agent were changed as shown in Table 1 below.

**[Table 1]**

| | type of chain transfer agent | injected amount of chain transfer agent(g/h) |
|---|---|---|
| Example 1 | A-1 | 100 |
| Example 2 | A-1 | 150 |
| Example 3 | A-1 | 200 |
| Example 4 | A-2 | 100 |
| Example 5 | A-2 | 150 |
| Example 6 | A-2 | 200 |
| Example 7 | A-3 | 100 |
| Example 8 | A-3 | 150 |
| Example 9 | A-3 | 200 |
| Comparative Example 1 | A-4 | 100 |
| Comparative Example 2 | A-4 | 150 |
| Comparative Example 3 | A-4 | 200 |
| Comparative Example 4 | A-5 | 100 |
| Comparative Example 5 | A-5 | 150 |
| Comparative Example 6 | A-5 | 200 |
| Comparative Example 7 | A-6 | 100 |
| Comparative Example 8 | A-6 | 150 |
| Comparative Example 9 | A-6 | 200 |

The specific component names and chemical formulas of the chain transfer agents in Table 1 are as follows.
1) A-1: 4-heptanone represented by Chemical Formula 2 below 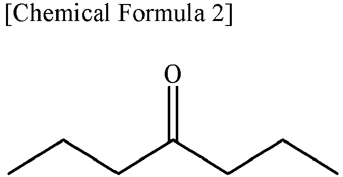
2) A-2: 2-heptanone represented by Chemical Formula 3 below 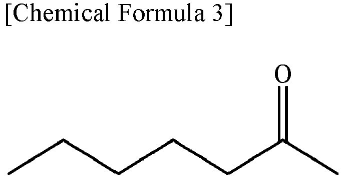
3) A-3: methyl isobutyl ketone (MIBK) represented by Chemical Formula 4 below 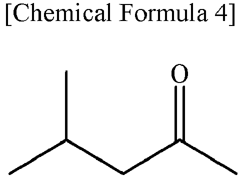
4) A-4: n-butyl acetate represented by Chemical Formula 5 below 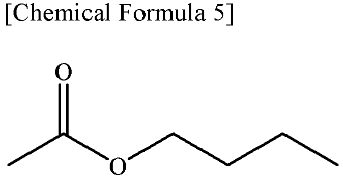
5) A-5: ethyl acetate represented by Chemical Formula 6 below 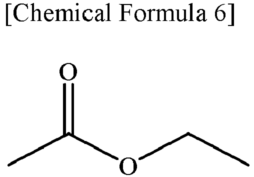
6) A-6: acetone represented by Chemical Formula 7 below

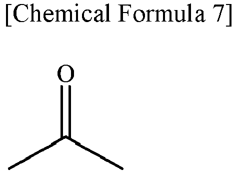

### Experimental Example

### (1) Measurement of chain transfer constant (Cs)

A weight average molecular weight of the copolymer synthesized in each of Examples and Comparative Examples was measured.

An injection amount of each chain transfer agent was increased to 100 g/h, 150 g/h and 200 g/h as shown in Table 1, and 1/(weight average molecular weight) according to (chain transfer agent concentration)/(ethylene monomer concentration) was measured. The measurement results were plotted to calculate a chain transfer constant as a slope.

The chain transfer constant measured by the above method corresponds to a ratio of a chain transfer rate constant (kₜᵣ) to a propagation rate constant (kₚ).

Values of the calculated chain transfer constants are shown in Table 2 below.

**[Table 2]**

| | 1/weight average molecular weight | chain transfer constant (Cs Value) |
|---|---|---|
| Example 1 | 0.0023 | 0.1792 |
| Example 2 | 0.0035 | |
| Example 3 | 0.0046 | |
| Example 4 | 0.0018 | 0.1232 |
| Example 5 | 0.0025 | |
| Example 6 | 0.0033 | |
| Example 7 | 0.0014 | 0.0852 |
| Example 8 | 0.0019 | |
| Example 9 | 0.0026 | |
| Comparative Example 1 | 0.0007 | 0.0234 |
| Comparative Example 2 | 0.0010 | |
| Comparative Example 3 | 0.0013 | |
| Comparative Example 4 | 0.00068 | 0.0145 |
| Comparative Example 5 | 0.00078 | |
| Comparative Example 6 | 0.00085 | |
| Comparative Example 7 | 0.00125 | 0.0442 |
| Comparative Example 8 | 0.00175 | |
| Comparative Example 9 | 0.00225 | |

Referring to Table 2, in Examples using the chain transfer agent represented by Chemical Formula 1, the chain transfer constant was 0.08 or more. Accordingly, the molecular weight was efficiently controlled with a small amount of the chain transfer agent.

In Comparative Examples using the chain transfer agent not included in Chemical Formula 1, the chain transfer constant was less than 0.05. Thus, a large amount of the chain transfer agent was required for controlling the molecular weight.

## Claims

1. A method of producing an ethylene-carboxylic acid copolymer, comprising
supplying an ethylene monomer to a reactor, and supplying a carboxylic acid comonomer to the reactor;
and
copolymerizing the ethylene monomer and the carboxylic acid comonomer using a chain transfer agent represented by Chemical Formula 1: 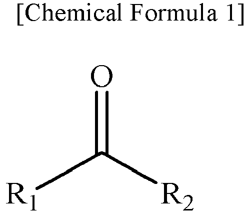
wherein, in Chemical Formula 1, R₁ is a C1 to C4 alkyl group,
R₂ is a C4 to C12 alkyl group when R₁ is a C1 to C2 alkyl group, and
R₂ is a C3 to C12 alkyl group when R₁ is a C3 to C4 alkyl group.

2. The method of claim 1, wherein R₁ is a methyl group or a propyl group, and R₂ is an alkyl group having 4 to 6 carbon atoms when R₁ is the methyl group, and R₂ is an alkyl group having 3 to 6 carbon atoms when R₁ is the propyl group.

3. The method of claim 2, wherein a sum of the number of carbon atoms in R₁ and R₂ is 6.

4. The method of claims 2 or 3, wherein the chain transfer agent includes at least one of methyl isobutyl ketone (MIBK), 2-heptanone and 4-heptanone.

5. The method of claims 1 to 4, wherein a chain transfer constant of the chain transfer agent for ethylene is in a range from 0.01 to 1.

6. The method of claim 5, wherein the chain transfer constant of the chain transfer agent for ethylene is greater than 0.08 and less than or equal to 1.

7. The method of claims 1 to 6, further comprising supplying a radical initiator.

8. The method of claim 7, wherein the radical initiator includes an organic peroxide.

9. The method according to claims 1 to 8, wherein a temperature of the copolymerization may be in a range from 150°C to 350°C, and a pressure of the copolymerization may be in a range from 1,500 bar to 3,000 bar.

10. The method of claims 1 to 9, wherein the carboxylic acid comonomer includes at least one selected from the group consisting of (meth)acrylic acid, methyl acrylate, ethyl acrylate, butyl acrylate, glycidyl methacrylate, maleic acid and vinyl acetate.

11. The method of claims 1 to 10, wherein a ratio of the flow rate of an injection amount of the chain transfer agent relative to an injection amount of the carboxylic acid comonomer is in a range from 0.1 g/hour to 5 g/hour.

12. The method of claims 1 to 11, further comprising recycling unreacted portions of the ethylene monomer, the carboxylic acid comonomer and the chain transfer agent into the copolymerization.

13. A method of operating a production of an ethylene-carboxylic acid copolymer, which includes a copolymerization of an ethylene monomer and a carboxylic acid comonomer in the presence of a chain transfer agent represented by Chemical Formula 1. 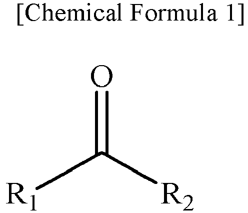
wherein in Chemical Formula 1, R₁ is a C1 to C4 alkyl group,
R₂ is a C4 to C12 alkyl group when R₁ is a C1 to C2 alkyl group, andR₂ is a C3 to C12 alkyl group when R₁ is a C3 to C4 alkyl group,
wherein the method comprises recycling unreacted portions of the ethylene monomer, the carboxylic acid comonomer and the chain transfer agent into the copolymerization.
